# EUROPÄISCHE PATENTSCHRIFT

(11) **EP 4 140 285 B1**
(45) Veröffentlichungstag und Bekanntmachung des Hinweises auf die Patenterteilung: **28.01.2026**
(21) Anmeldenummer: 22173931.1
(22) Anmeldetag: 18.05.2022
(51) Int. Cl.: A01D 43/08, G01F 23/263, G01F 1/002, G01F 1/56, A01D 41/127

(54) **KAPAZITIVE PARAMETERMESSUNG IN EINEM SELBSTFAHRENDEN FELDHÄCKSLER**
CAPACITIVE PARAMETER MEASUREMENT IN A SELF-PROPELLED FORAGE HARVESTER
MESURE CAPACITIVE DES PARAMÈTRES DANS UNE RAMASSEUSE-HACHEUSE-CHARGEUSE AUTOMOTRICE

(30) Priorität: 26.08.2021 DE 102021122076; 31.08.2021 DE 102021122459
(43) Veröffentlichungstag der Anmeldung: 01.03.2023
(73) Patentinhaber: CLAAS Selbstfahrende Erntemaschinen GmbH, 33428 Harsewinkel (DE)
(72) Erfinder: LEHMANN, Christoph, 49191 Belm (DE); NEITEMEIER, Dennis, 59510 Lippetal (DE); HEITMANN, Christoph, 48231 Warendorf (DE)
(74) Vertreter: CLAAS Gruppe

(56) Entgegenhaltungen:
- EP-B1- 3 300 581
- DE-A1- 102010 037 915
- DE-A1- 19 934 881
- US-A1- 2015 233 855

## Beschreibung

Die vorliegende Erfindung betrifft einen selbstfahrenden Feldhäcksler und ein Verfahren zum Steuern dieses Feldhäckslers.

Typischerweise werden in einem selbstfahrenden Feldhäcksler mehrere Gutstränge, insbesondere zwei Gutstränge, aus einem Vorsatzgerät in einen Erntegutbearbeitungskanal gefördert. Diese Gutstränge bilden im selbstfahrenden Feldhäcksler einen Erntegutstrom aus, der häufig keine gleichmäßige und/oder keine rechteckförmige Querschnittsverteilung aufweist. Bei zwei Gutsträngen entsteht daher oft ein Erntegutstrom mit einer M-förmigen Querschnittsverteilung. Eine solche ungleichmäßige Querschnittsverteilung des Erntegutstroms führt zu einer schlechteren Häckselqualität, die zu einer schlechteren Schnittqualität mit Überlängen des Erntegutes führen kann. Ferner führt eine nicht gleichmäßige und/oder nicht rechteckförmige Querschnittsverteilung des Erntegutstroms zu einem ungleichmäßigen Verschleiß der Bauteile des Feldhäckslers. Der ungleichmäßige Verschleiß der Bauteile, wie beispielsweise von Messern, Crackwalzen, usw., führt zu unnötig verkürzten Standzeiten der Bauteile.

Die EP 3 300 581 B1 beschreibt einen Feldhäcksler mit einer Messleiste, die eine Vielzahl von Sensoren aufweist und den Erntegutbearbeitungskanal zumindest teilweise durchsetzt, wobei die Messleiste zur Erfassung einer Querverteilung im Erntegutbearbeitungskanal vorgesehen ist. Die Sensoren können als kapazitive Sensoren ausgebildet sein. Gemäß der EP 3 300 581 B1 wird eine Messleiste im Einzugskanal, an einer Häckseltrommel, an einer Konditionierwalze oder an einer Nachbeschleunigungstrommel angeordnet.

Der vorliegenden Erfindung liegt die Aufgabe zugrunde, eine verbesserte oder zumindest eine alternative Ausführungsform eines selbstfahrenden Feldhäckslers mit einer Messvorrichtung anzugeben.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass eine Messvorrichtung des Feldhäckslers mehrere voneinander beabstandete Elektroden aufweist, wobei diese Elektroden in einem Zwischenkanal eines Erntegutbearbeitungskanals des Feldhäckslers angeordnet sind und mehrere Kondensatoren ausbilden, wobei durch Messungen der elektrischen Kapazitäten der mehreren Kondensatoren förderspezifische Parameter und/oder gutspezifischen Parameter ermittelbar sind. Insbesondere lässt sich mittels der gemessenen Kapazitäten aller Kondensatoren eine Querverteilung des Ernteguts ermitteln und eine Optimierung und/oder Verbesserung der Querverteilung des Ernteguts im Falle einer nicht gleichmäßigen Querverteilung des Ernteguts bewirken.

Der erfindungsgemäße selbstfahrende Feldhäcksler zur Aufnahme und Behandlung von Erntegut umfasst ein Vorsatzgerät zur Aufnahme von Erntegut und einen Erntegutbearbeitungskanal, der dem Vorsatzgerät nachgeordnet ist. Das Vorsatzgerät kann verstellbare, insbesondere ungleich verstellbare und/oder unterschiedlich verstellbare, Aktoren zur Durchführung der Aufnahme des Ernteguts aufweisen. Das Vorsatzgerät kann derart ausgebildet sein, dass die Position und/oder der Abstand und/oder die Drehzahl eines oder mehrerer Aktoren des Vorsatzgerätes erfolgen kann.

Der Erntegutbearbeitungskanal weist einen Einzugskanal zum Zuführen des Erntegutes in den Feldhäcksler, eine Häckseltrommel zum Verarbeiten des Ernteguts und eine Nachbeschleunigungstrommel zum Nachbeschleunigen des Ernteguts auf. Ferner weist der Erntegutbearbeitungskanal einen Zwischenkanal zum Weiterführen des Ernteguts von der Häckseltrommel zur Nachbeschleunigungstrommel und einen Auswurfschacht zum Auswerfen des Ernteguts auf.

Der Einzugskanal zum Zuführen des Erntegutes kann verstellbare, insbesondere ungleich verstellbare und/oder unterschiedlich verstellbare, Aktoren zur Durchführung der Zuführung von Erntegut aufweisen. Der Erntegutbearbeitungskanal, insbesondere der Einzugskanal, kann derart ausgebildet sein, dass die Position und/oder der Abstand und/oder die Drehzahl eines oder mehrerer Aktoren des Einzugskanals erfolgen kann. Solche Aktoren können beispielsweise Einzugstrommeln und/oder Vorpresstrommeln sein.

Die Häckseltrommel kann um eine Häckseltrommel-Drehachse drehbar ausgebildet und/oder gelagert sein. Die Nachbeschleunigungstrommel kann um eine Nachbeschleunigungstrommel-Drehachse drehbar und/oder gelagert ausgebildet sein. Die Häckseltrommel-Drehachse kann parallel zur Nachbeschleunigungstrommel-Drehachse ausgerichtet sein.

Der Feldhäcksler weist eine Messvorrichtung zur Erfassung förderspezifischer Parameter und/oder gutspezifischer Parameter auf. Förderspezifische Parameter und/oder gutspezifische Parameter können die Querschnittsverteilung des geförderten Erntegutes und/oder die Feuchtigkeit des geförderten Erntegutes und/oder die Dichte des geförderten Erntegutes und/oder die Durchsatzmenge des geförderten Erntegutes sein.

Die Querschnittsverteilung des geförderten Erntegutes kann von der Führung des Erntegutes im Vorsatzgerät und/oder von der Führung des Erntegutes im Einzugskanal und/oder von Prozessparametern und/oder von Pflanzenparametern abhängig sein.

Die Messvorrichtung weist mehrere voneinander beabstandete Elektroden auf, wobei diese Elektroden im Zwischenkanal des Erntegutbearbeitungskanals angeordnet sind und mehrere Kondensatoren ausbilden, wobei durch Messungen der elektrischen Kapazitäten der mehreren Kondensatoren die förderspezifischen Parameter und/oder gutspezifischen Parameter ermittelbar sind. Zwei voneinander beabstandete Elektroden können einen Kondensator ausbilden. Die Anordnung der Elektroden im Zwischenkanal hat den Vorteil, dass beispielsweise eine Messung der Querschnittsverteilung des geförderten Erntegutes für den Bereich vor dem Nachbeschleuniger möglich ist. Im Gegensatz dazu wird nach dem Nachbeschleuniger das zerkleinerte Erntegut bzw. Häckselgut derart eingeschnürt, dass eine Messung der Querschnittsverteilung des geförderten Erntegutes nach dem Nachbeschleuniger beispielsweise für den Bereich vor dem Nachbeschleuniger nicht aussagekräftig ist.

Die Elektroden können jeweils eine Schutzeinrichtung, insbesondere eine elektrisch schwachleitende Schicht und/oder eine nichtleitende Schicht, aufweisen. Diese Schutzeinrichtung kann aus einem nicht-metallischen Material ausgebildet sein. Die Elektroden können für eine berührungslose Messung innerhalb wenigstens einer Wandung des Zwischenkanals angeordnet sein.

Die Kapazität der Kondensatoren im Zwischenkanal des Erntegutbearbeitungskanals wird durch zerkleinertes Erntegut bzw. Häckselgut, welches von Häckseltrommeln gehäckselt wurde, beeinflusst. Häckselgut weist im Vergleich zu Luft eine signifikant höhere Permittivität auf. Die höhere Permittivität des Häckselguts kann an einem höheren Wasseranteil im Vergleich zur Luft liegen. Diese Eigenschaft führt dazu, dass sich die Kapazität eines Kondensators verändert, wenn das Häckselgut in Vergleich zu Luft in der Nähe des Kondensators ist. Daher sind durch die Messungen der elektrischen Kapazitäten der Kondensatoren förderspezifische Parameter und/oder gutspezifische Parameter ermittelbar. Beispielsweise bewirkt eine relative Änderung der Querverteilung des Häckselguts eine relative Änderung der Permeabilität und damit eine relative Änderung der Kapazitäten der Kondensatoren. Anschließend kann ein Ansteuern der Aktoren des Vorsatzgerätes und/oder der Aktoren des Einzugskanals in Abhängigkeit von den ermittelten förderspezifischen Parametern und/oder gutspezifischen Parameter erfolgen. Eine solche Ansteuerung dieser Aktoren kann eine gleichmäßige und/oder rechteckförmige Querschnittsverteilung des Ernteguts bewirken, sodass eine verbesserte Vorpressung, insbesondere eine gleichmäßige Vorpressung, des Erntegutes erreicht werden kann. Ein weiterer Vorteil ist, dass hierdurch eine maximale Auslastung des Feldhäckslers erreichbar ist. Die Sensorik mit den Kondensatoren ist für alle in der Regel verwendeten Fruchtarten einsetzbar, da die Bedingung der unterschiedlichen Permittivität im Vergleich zu Luft durch den Wassergehalt der Pflanzen im Allgemeinen gegeben ist.

Bei einer vorteilhaften Weiterbildung der erfindungsgemäßen Lösung ist vorgesehen, dass die Elektroden innerhalb wenigstens einer Wandung des Zwischenkanals angeordnet sind. Somit kann auf eine zusätzliche Messleiste, die einen erhöhten Durchströmungswiderstand bewirkt, verzichtet werden. Hierdurch kann der Durchströmungswiderstand für das zerkleinerte Erntegut bzw. Häckselgut innerhalb des Zwischenkanals trotz vorhandener Elektroden optimiert, insbesondere minimiert, werden. Somit kann eine berührungslose Messung der Kapazitäten der Kondensatoren erzielt werden, sodass bei der Wahl des Einbauortes der Elektroden nicht auf eine mögliche Stopfung des zerkleinertes Erntegut bzw. Häckselgut geachtet werden muss.

Der Zwischenkanal kann mehrere Wandungen, insbesondere je zwei sich gegenüberliegende Wandungen, aufweisen. Es können mehrere, insbesondere alle, Elektroden innerhalb einer einzigen Wandung des Zwischenkanals oder innerhalb mehrerer Wandungen des Zwischenkanals, insbesondere innerhalb zwei sich gegenüberliegenden Wandungen des Zwischenkanals, angeordnet sein. Die Elektroden können jeweils eine Schutzeinrichtung aufweisen, wobei die Schutzeinrichtungen jeweils flächenschlüssig mit einer Innenfläche innerhalb des Zwischenkanal ausgebildet sein können.

Bei einer vorteilhaften Weiterbildung der erfindungsgemäßen Lösung ist vorgesehen, dass der Erntegutbearbeitungskanal eine Konditioniereinrichtung zur Konditionierung des Ernteguts aufweist. Die Konditioniereinrichtung ist zwischen der Häckseltrommel und der Nachbeschleunigungstrommel angeordnet ist, wobei die Elektroden im Zwischenkanal zwischen der Häckseltrommel und der Konditioniereinrichtung angeordnet sind. Eine Konditioniereinrichtung kann ein Corn-Cracker sein. Hierdurch können förderspezifische Parameter und/oder gutspezifische Parameter vor der Konditioniereinrichtung ermittelt werden.

Bei einer vorteilhaften Weiterbildung der erfindungsgemäßen Lösung ist vorgesehen, dass die Kondensatoren im Zwischenkanal entlang einer Querrichtung quer zur Strömungsrichtung des Ernteguts angeordnet sind, und/oder dass die Elektroden der Kondensatoren bezüglich einer Höhenrichtung, die quer zur Strömungsrichtung des Ernteguts und quer zur Querrichtung ausgerichtet ist, voneinander beabstandet angeordnet sind, sodass das Erntegut durch die Kondensatoren durchströmen kann. Die Querrichtung kann parallel zur Häckseltrommel-Drehachse und/oder parallel zur Nachbeschleunigungstrommel-Drehachse ausgerichtet sein.

Die Elektroden der Kondensatoren können innerhalb zwei sich gegenüberliegenden Wandungen des Zwischenkanals angeordnet sein. Die Elektroden eines Kondensators können bezüglich der Höhenrichtung eine Beabstandung von bis zu 200 mm, insbesondere von 150 mm, aufweisen. Eine Elektrode eines Kondensators kann eine Strömungslänge in Strömungsrichtung und eine Querlänge in Querrichtung aufweisen. Die Strömungslänge der Elektrode kann zwei bis viermal so lang sein wie die Querlänge der Elektrode. Beispielsweise kann die Strömungslänge der Elektrode 40 mm betragen, während die Querlänge der Elektrode 22 mm betragen kann. Jede Elektrode aller Kondensator kann eine solche Ausgestaltung aufweisen.

Bei einer vorteilhaften Weiterbildung der erfindungsgemäßen Lösung ist vorgesehen, dass eine Elektrode eines Kondensators mit einer Elektrode wenigstens eines weiteren Kondensators einen Zwischenkodensator ausbildet, wobei der Abstand zwischen diesen Elektroden des Zwischenkodensators größer ist als der Abstand der Elektroden der Kondensatoren. Es kann vorgesehen sein, dass der Abstand der Elektroden der Kondensatoren dem Abstand der Elektroden bezüglich der Höhenrichtung entspricht. Um eine verbesserte Auflösung der Querschnittsverteilung des geförderten Erntegutes zu ermöglichen, werden nicht nur die gegenüberliegenden Elektroden ausgewertet, sondern auch weiter zueinander entfernte Elektroden. Durch eine zuvor bestimmte Sensitivitätsverteilungsmatrix kann durch diese zusätzlichen Messungen die Querschnittsverteilungsberechnung verbessert werden. Die Kapazitäten werden beispielsweise über die Querrichtung bestimmt. Nach dem Durchlauf können die Messergebnisse unter Hinzunahme der Sensitivitätsverteilungsmatrix ausgewertet und eine Permittivitätsverteilung über die Querrichtung bestimmt werden.

Bei einer vorteilhaften Weiterbildung der erfindungsgemäßen Lösung ist vorgesehen, dass eine einzige Elektrode bezüglich der Höhenrichtung von einer Vielzahl von Elektroden beabstandet angeordnet ist, wobei diese einzige Elektrode mit allen bezüglich der Höhenrichtung beabstandeten Elektroden mehrere Kondensatoren ausbildet. Die Vielzahl von Elektroden, die von der einzige Elektrode beabstandet angeordnet sind, können in einer Ebene und/oder komplanar angeordnet sein. Es kann vorgesehen sein, dass die einzige Elektrode mit jeder der bezüglich der Höhenrichtung beabstandeten Elektroden jeweils und zeitgleich einen Kondensator ausbildet. Diese zeitgleiche Messung hat den Vorteil, dass Fehler bzw. Abweichungen durch zeitliche Änderungen des Durchsatzes des zerkleinerten Ernteguts bzw. Häckselguts minimiert werden.

Bei einer vorteilhaften Weiterbildung der erfindungsgemäßen Lösung ist vorgesehen, dass die einzige Elektrode eine größere Ausdehnung bezüglich der Querrichtung aufweist als die bezüglich der Höhenrichtung beabstandeten Elektroden, und/oder dass die einzige Elektrode eine größere Ausdehnung entlang der Querrichtung aufweist als die Summe der Querrichtungs-Ausdehnungen aller bezüglich der Höhenrichtung beabstandeten Elektroden. Hierdurch kann der kürzeste Abstand zwischen der einzigen Elektrode und allen bezüglich der Höhenrichtung beabstandeten Elektroden reduziert werden.

Bei einer vorteilhaften Weiterbildung der erfindungsgemäßen Lösung ist vorgesehen, dass wenigstens zwei bezüglich der Querrichtung zueinander beabstandete Elektroden, deren Position bezüglich der Höhenrichtung übereinstimmend ist, einen Querkondensator ausbilden. Es kann vorgesehen sein, dass alle Elektroden der Messvorrichtung eine übereinstimmende Position bezüglich der Höhenrichtung aufweisen und in einer Ebene voneinander beabstandet angeordnet sind, wobei zwischen zwei beliebigen Elektroden die Kapazität messbar ist, da zwei beliebige Elektroden jeweils einen Querkondensator ausbilden. Mit anderen Worten ausgedrückt, können alle Elektroden komplanar angeordnet sein. Hierdurch lässt sich ein sehr kompakter Aufbau realisieren.

Bei einer vorteilhaften Weiterbildung der erfindungsgemäßen Lösung ist vorgesehen, dass die Messvorrichtung eine Steuerungs- und Regelungseinrichtung aufweist, die dazu ausgebildet ist, die Kapazität der Kondensatoren und/oder die Kapazität wenigstens eines Zwischenkodensators und/oder die Kapazität wenigstens eines Querkondensators zu erfassen, wobei die Steuerungs- und Regelungseinrichtung dazu ausgebildet ist, mittels der erfassten Kapazitäten die Querverteilung des Ernteguts zu ermitteln. Hierbei ist die Steuerungs- und Regelungseinrichtung dazu ausgebildet, Aktoren des Vorsatzgerätes und/oder Aktoren des Einzugskanals anhand der ermittelten Querverteilung des Ernteguts zu steuern. Die Steuerungs- und Regelungseinrichtung kann dazu ausgebildet sein, dass die Aktoren des Vorsatzgerätes und/oder die Aktoren des Einzugskanals anhand der ermittelten Querverteilung des Ernteguts derart angesteuert werden, dass die Querverteilung des Ernteguts vergleichmäßigt wird.

Die Steuerungs- und Regelungseinrichtung kann dazu ausgebildet sein, die Kapazitäten aller Kondensatoren und/oder die Kapazitäten aller Zwischenkodensatoren und/oder die Kapazitäten aller Querkondensatoren simultan und/oder zeitgleich zu erfassen.

Die Steuerungs- und Regelungseinrichtung kann dazu ausgebildet sein, die Kapazitäten aller Kondensatoren und/oder die Kapazitäten aller Zwischenkodensatoren und/oder die Kapazitäten aller Querkondensatoren nacheinander, insbesondere zeitlich nacheinander, zu erfassen. Mit anderen Worten ausgedrückt, wird hierbei die Kapazität zwischen zwei Elektroden ermittelt und zeitlich daran anschließend die Kapazität zwischen zwei weiteren Elektroden.

Bei einer vorteilhaften Weiterbildung der erfindungsgemäßen Lösung ist vorgesehen, dass die Messvorrichtung wenigstens einen Wechselspannungserzeuger zum Erzeugen einer Wechselspannung aufweist, und/oder dass die Messvorrichtung wenigstens eine Verstärkereinheit zum Verstärken eines Signals aufweist, und/oder dass die Messvorrichtung wenigstens einen elektrischen Verstärker zur Umwandlung eines Eingangsstroms in eine proportionale Ausgangsspannung aufweist, und/oder dass die Messvorrichtung wenigstens einen Detektor, insbesondere wenigstens einen logarithmischen Detektor, zur Umwandlung eines einer Wechselspannung in ein Leitungssignal aufweist, und/oder dass die Messvorrichtung wenigstens einen Analog-Digital-Wandler zur Umwandlung eines analogen Signals in ein digitales, insbesondere digital interpretierbares, Signal aufweist.

Der Wechselspannungserzeuger kann eine Direct-Digital-Synthesis-Einheit sein. Die Verstärkereinheit kann ein eingehendes Signal mit einem festgelegten Faktor und/oder einstellbaren Faktor erhöht werden. Der elektrische Verstärker kann ein Transimpedanzverstärker sein, der einen Eingangsstrom in eine proportionale Ausgangsspannung umwandelt. Der logarithmische Detektor kann zur Wandlung der Wechselspannung eines Transimpedanzverstärkers in ein Leistungssignal ausgebildet sein. Die Messvorrichtung kann einen Anschlussbauteil oder mehrere Anschlussbauteile aufweisen. Ein Anschlussbauteil kann ein Eingangsbauteil oder ein Ausgangsbauteil sein. An einem solchen Anschlussbauteil können weitere Komponenten, insbesondere Sensoren, angeschlossen werden.

Hierbei kann der Wechselspannungserzeuger elektrisch leitend mit der Verstärkereinheit verbunden sein, wobei die Verstärkereinheit über ein Anschlussbauteil, welches ein Ausgangsbauteil ausbildet, mit einer ersten Elektrode eines Kondensators elektrisch leitend verbunden sein kann. Eine zweite Elektrode des Kondensators kann beabstandet zur ersten Elektrode angeordnet sein. Eine elektrische Stromleitung zwischen der ersten Elektrode und der zweiten Elektrode ist unterdrückt bzw. bildet sich nicht aus. Die zweite Elektrode des Kondensators kann mit einem weiteren Anschlussbauteil, welches ein Eingangsbauteil ausbildet, elektrisch leitend verbunden sein. Das weitere Anschlussbauteil kann mit dem Transimpedanzverstärker elektrisch leitend verbunden sein. Der Transimpedanzverstärker kann elektrisch leitend mit dem Detektor, insbesondere mit dem logarithmischen Detektor, verbunden sein. Der Detektor, insbesondere der logarithmische Detektor, kann elektrisch leitend mit der Verstärkereinheit verbunden sein. Die Verstärkereinheit kann elektrisch leitend mit dem Analog-Digital-Wandler verbunden sein. Der Analog-Digital-Wandler kann mit einem weiteren Anschlussbauteil, welches ein Ausgangsbauteil ausbildet, verbunden sein.

Bei einer vorteilhaften Weiterbildung der erfindungsgemäßen Lösung ist vorgesehen, dass wenigstens ein Kondensator zwei Elektroden aufweist, wobei diese Elektroden bezüglich der Höhenrichtung einen Abstand von 130 mm bis 180 mm, insbesondere 150 mm, aufweisen, und/oder dass wenigstens ein Kondensator wenigstens eine Elektrode aufweist, die bezüglich der Querrichtung und bezüglich der Strömungsrichtung unterschiedliche Längen aufweist. Hierdurch lässt sich der Aufbau der Kondensator bezüglich der Messungen der elektrischen Kapazitäten optimieren.

Ferner betrifft die Erfindung ein Verfahren, insbesondere ein computerimplementiertes Verfahren, zum Steuern eines selbstfahrenden erfindungsgemäßen Feldhäckslers, mit den Schritten: Erfassen der Kapazität der Kondensatoren und/oder der Kapazität wenigstens eines Zwischenkodensators und/oder der Kapazität wenigstens eines Querkondensators, Ermitteln der Querverteilung des Ernteguts basierend auf den erfassten Kapazitäten und das Ansteuern der Aktoren des Vorsatzgerätes und/oder der Aktoren des Einzugskanals in Abhängigkeit von der ermittelten Querverteilung des Ernteguts.

Die Erfassung einer Kapazität kann einer Messung der Kapazität entsprechen. Die Erfassung der Kapazität kann mittels unterschiedlicher Verfahren ausgeführt werden. Hierfür kann ein Lade-/Entladeverfahren, ein Oszillationsverfahren und/oder ein Wechselspannungsansatz eingesetzt werden. Die Erfassung der Kapazität kann im bzw. mit einem Gleichfeld oder Wechselfeld erfolgen. Hierbei kann das Wechselfeld eine Frequenz aus dem niederfrequenten Spektrum, insbesondere bis zu 10 MHz oder bis zu 30 kHz oder bis zu 3 kHz oder bis 300 Hz oder bis zu 30 Hz, eingesetzt werden. Insbesondere kann eine Frequenz zwischen 10 kHz und 10 MHz eingesetzt werden. Die Messung kann seriell oder parallel durchgeführt werden. Dies bedeutet, dass die Messungen der einzelnen Kapazitäten gleichzeitig oder zeitlich nacheinander durchgeführt werden kann.

Die Erfassung und Digitalisierung der Kapazitäten kann vorzugsweise mit einem Wechselspannungsverfahren realisiert werden. Weitere mögliche Schaltungen sind beispielsweise ein RC-Schwingkreis, LC-Schwingkreis oder eine Lade-/Entladeschaltung. Der Vorteil in der Wechselspannungsmessung ist die hohe Immunität gegen Streukapazitäten und die hohen möglichen Abtastraten. Auch kann durch die Verwendung des Wechselspannungsverfahrens die Dimension der Frequenz der Wechselspannung mit in die Messung einbezogen werden. Dies hat den Vorteil, dass eine Kompensation des Feuchtigkeitseinflusses aus den Messergebnissen möglich ist.

Bei unbekannter Durchsatzmenge kann die Querverteilung beispielsweise relativ zur Gutmenge berechnet werden. Diese Information ist ausreichend, um beispielsweise als Information für die Maschinenaktorik zu dienen. Durch ein zusätzliches Durchsatzsensorsignal kann der relative Verlauf auch in eine absolute Querverteilung umgerechnet werden. Das Signal der relativen Querverteilung kann wiederum die Berechnung der Durchsatzmenge verbessern, da nicht nur die maximale Höhe erfasst wird, sondern auch die Bereiche geringerer Auslastung. Dies hat zur Folge, dass das kalibrierte Durchsatzsignal auch nach einer Verstellung des Einzugs noch zuverlässige Ergebnisse liefern kann, da die Querverteilung kompensiert werden kann. Auch ist die Erfassung des Gesamtdurchsatzes durch den Sensor denkbar, wenn das System kalibriert wird und das Signal der Feuchte mit in die Berechnung aufgenommen wird.

Bei einer vorteilhaften Weiterbildung der erfindungsgemäßen Lösung ist vorgesehen, dass das Erfassen der Kapazität der Kondensatoren, insbesondere aller Kondensatoren, und/oder der Kapazität wenigstens eines Zwischenkodensators und/oder der Kapazität wenigstens eines Querkondensators zeitlich nacheinander erfolgt, und/oder dass das Erfassen der Kapazität der Kondensatoren, insbesondere aller Kondensatoren, und/oder der Kapazität wenigstens eines Zwischenkodensators und/oder der Kapazität wenigstens eines Querkondensators zeitgleich erfolgt.

Eine zeitlich nacheinander ablaufende Messung der Kapazitäten kann als serieller Messablauf bezeichnet werden. Beim seriellen Messablauf wird ein einziges Elektrodenpaar ausgewertet und die Kapazität des Elektrodenpaars bestimmt. Hierbei kann die Kapazitäten aller Kondensatoren und/oder die Kapazitäten aller Zwischenkodensatoren und/oder die Kapazitäten aller Querkondensatoren nacheinander, insbesondere zeitlich nacheinander, erfasst werden. Nach einer Messung wird das nächste Elektrodenpaar angesteuert und ausgewertet. Um eine verbesserte Auflösung der Querverteilung des zerkleinerten Ernteguts bzw. Häckselguts zu ermöglichen, kann vorgesehen sein, dass nicht nur bezüglich der Höhenrichtung gegenüberliegende Elektroden ausgewertet werden, sondern auch weiter entfernte Elektroden. Durch eine zuvor bestimmte Sensitivitätsverteilungsmatrix kann durch diese zusätzlichen Messungen die Querverteilungsberechnung verbessert werden. Nach dem Durchlauf der Messungen können die Messergebnisse unter Hinzunahme der Sensitivitätsverteilungsmatrix ausgewertet und/oder eine Permittivitätsverteilung bezüglich der Querrichtung ermittelt bzw. berechnet werden. Diese Permittivitätsverteilung kann als Steuergröße für die Optimierung der Querverteilung des zerkleinerten Ernteguts bzw. Häckselguts eingesetzt werden. Die Permittivitätsverteilung kann als Steuergröße für das Ansteuern der Aktoren des Vorsatzgerätes und/oder der Aktoren des Einzugskanals eingesetzt werden.

Eine zeitlich parallel ablaufende Messung der Kapazitäten kann beispielsweise mit einer einzelnen Gegenelektrode erfolgen. Die einzige Gegenelektrode kann bezüglich der Höhenrichtung von einer Vielzahl von Elektroden beabstandet angeordnet sein. Die einzige Gegenelektrode kann dabei mit der Vielzahl von Elektroden jeweils einen Kondensator ausbilden, wobei Kapazitäten dieser Kondensatoren zeitgleich erfassbar bzw. messbar sind. Hierbei kann ein Wechselspannungsansatz verwendet werden. Auf die Gegenelektrode kann ein harmonisches Signal angelegt werden. Auf einer Erfassungsseite können die Kapazitäten kontinuierlich ausgewertet werden. Dies hat den Vorteil, dass die Fehler durch zeitliche Änderungen des Durchsatzes minimiert werden. Durch die Erfassung der Querverteilung kann das Durchsatzsignal des Feldhäckslers optimiert werden. Dies ermöglicht, dass Ungleichmäßigkeiten des Ernteguts beispielsweise in einer Gutmatte kompensiert werden können. Die Information über die Querverteilung ergänzt beispielsweise eine Messung des Durchsatzes und kann den Kalibrieraufwand verringern, da die durchgeführte Kalibration auch bei Einzugsveränderungen noch zulässig ist.

Bei einer vorteilhaften Weiterbildung der erfindungsgemäßen Lösung ist vorgesehen, dass eine Optimierung der Querverteilung des Ernteguts im Falle einer nicht gleichmäßigen Querverteilung des Ernteguts initiiert wird, wobei hierfür das Ansteuern der Aktoren des Vorsatzgerätes und/oder der Aktoren des Einzugskanals in Abhängigkeit von der ermittelten Querverteilung des Ernteguts erfolgt. Hierdurch kann eine Optimierung und/oder Verbesserung der Querverteilung des Ernteguts im Falle einer nicht gleichmäßigen Querverteilung des Ernteguts bewirkt werden.

Ferner betrifft die Erfindung ein Computerprogramm, insbesondere ein Computerprogrammprodukt, umfassend Befehle, die bewirken, dass die erfindungsgemäße Vorrichtung die erfindungsgemäßen Verfahrensschritte ausführt.

Ferner betrifft die Erfindung ein computerlesbares Medium, auf dem das erfindungsgemäße Computerprogramm ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung nähererläutert, wobei sich gleiche Bezugszeichen auf gleiche oder ähnliche oder funktional gleiche Komponenten beziehen.

Es zeigen, jeweils schematisch,
- Fig. 1: einen selbstfahrenden Feldhäcksler gemäß dem Stand der Technik, und
- Fig. 2: einen Zweistrangeinzug gemäß dem Stand der Technik, und
- Fig. 3: eine Querverteilung von Erntegut zwischen Einzugstrommeln gemäß dem Stand der Technik, und
- Fig. 3a: eine Querverteilung von Erntegut zwischen Einzugstrommeln gemäß der Erfindung, und
- Fig. 4: einen Querschnitt eines erfindungsgemäßen Erntegutbearbeitungskanals, und
- Fig. 5: einen Querschnitt einer erfindungsgemäßen Messvorrichtung, und
- Fig. 6: einen Querschnitt einer weiteren erfindungsgemäßen Messvorrichtung, und
- Fig. 7: einen Querschnitt durch einen erfindungsgemäßen Kondensator, und
- Fig. 8: eine erfindungsgemäße Messschaltung zur Ermittlung der Querverteilung von Erntegut.

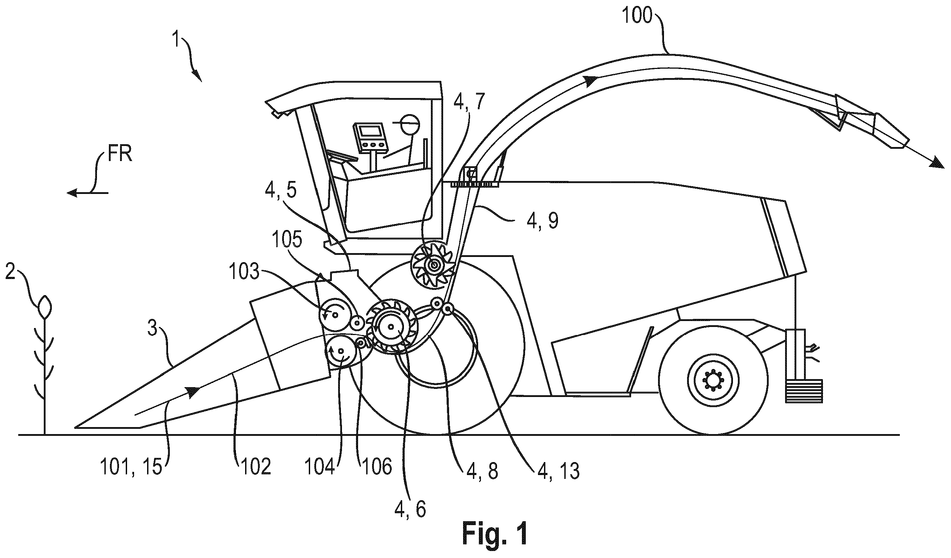

Die Fig. 1 zeigt einen selbstfahrenden Feldhäcksler 1 nach dem Stand der Technik. Der Feldhäcksler 1 weist ein Vorsatzgerät 3 zur Aufnahme von Erntegut 2 auf. Im Betrieb des Feldhäckslers 1 fährt der Feldhäcksler 1 in eine Fahrtrichtung FR durch einen Erntegutbestand 2 und nimmt dabei mit dem Vorsatzgerät 3 das Erntegut 2 auf. Im Erntebetrieb des Feldhäckslers 1 wird das Erntegut 2 vom Vorsatzgerät 3 geschnitten. Das geschnittene Erntegut 2 bildet einen Erntegutstrom 102 aus, der entlang einer Förderrichtung 101 gefördert wird.

Das Vorsatzgerät 3 ist austauschbar am Feldhäcksler 1 angeordnet. In Abhängigkeit vom Erntegut 2 und dem Erntegutzweck können so verschiedene Vorsatzgeräte 3 genutzt werden. Als Vorsatzgeräte 3 kommen beispielsweise eine Pick up, ein Maisvorsatz, ein Mähwerk (Direct Disc), ein Maispflücker oder ein Schneidwerk, insbesondere mit Haspel, zum Einsatz.

Das Vorsatzgerät 3 nimmt das Erntegut 2 auf und fördert es zu einem Erntegutbearbeitungskanal 4 des Feldhäcksler 1, wobei der Erntegutbearbeitungskanal 4 das Erntegut 2 bearbeitet und anschließend zu einem Auswurfkrümmer 100 des Feldhäckslers 1 fördert. Der Erntegutbearbeitungskanal 4 ist dem Vorsatzgerät 3 bezüglich der Förderrichtung 101 nachgeordnet.

Der Erntegutbearbeitungskanal 4 weist einen Einzugskanal 5 zum Zuführen des Ernteguts 2 in den Feldhäcksler 1, eine Häckseltrommel 6 zum Verarbeiten des Ernteguts 2 und eine Nachbeschleunigungstrommel 7 zum Nachbeschleunigen des Ernteguts 2 auf. Der Erntegutbearbeitungskanal 4 weist ferner einen Zwischenkanal 8 zum Weiterführen des Ernteguts 2 von der Häckseltrommel 6 zur Nachbeschleunigungstrommel 7 auf, wobei der Zwischenkanal 8 bezüglich der Förderrichtung 101 zwischen der Häckseltrommel 6 und der Nachbeschleunigungstrommel 7 angeordnet und/oder ausgebildet ist. Ferner weist der Erntegutbearbeitungskanal 4 einen Auswurfschacht 9 zum Auswerfen des Ernteguts 2 auf, wobei der Auswurfschacht 9 bezüglich der der Förderrichtung 101 hinter der Nachbeschleunigungstrommel 7 angeordnet und/oder ausgebildet ist. Der Auswurfkrümmer 100 des Feldhäckslers 1 ist bezüglich der der Förderrichtung 101 hinter dem Auswurfschacht 9 angeordnet und/oder ausgebildet.

Der Einzugskanal 5 zum Zuführen des Erntegutes 2 kann verstellbare, insbesondere ungleich verstellbare und/oder unterschiedlich verstellbare, Aktoren 103, 104, 105 und 106 zur Durchführung der Zuführung von Erntegut 2 aufweisen. Der Erntegutbearbeitungskanal 4, insbesondere der Einzugskanal 5, kann derart ausgebildet sein, dass die Position und/oder der Abstand und/oder die Drehzahl eines oder mehrerer Aktoren des Einzugskanals 2 erfolgen kann. Solche Aktoren können beispielsweise Einzugstrommeln 103, 104 und/oder Vorpresstrommeln 105, 106 sein.

Der Einzugskanal 5 kann zwei gegenläufig zueinander betriebene Einzugstrommeln 103, 104 sowie zwei gegenläufig zueinander betriebene Vorpresstrommeln 105, 106 aufweisen. Die beiden Einzugstrommeln 103, 104 und die beiden Vorpresstrommeln 105, 106 sind jeweils in Höhenrichtung 16 im Wesentlichen übereinander angeordnet. Das Erntegut 3 wird jeweils zwischen den beiden Einzugstrommeln 103, 104 und zwischen den beiden Vorpresstrommeln 105, 106 geführt.

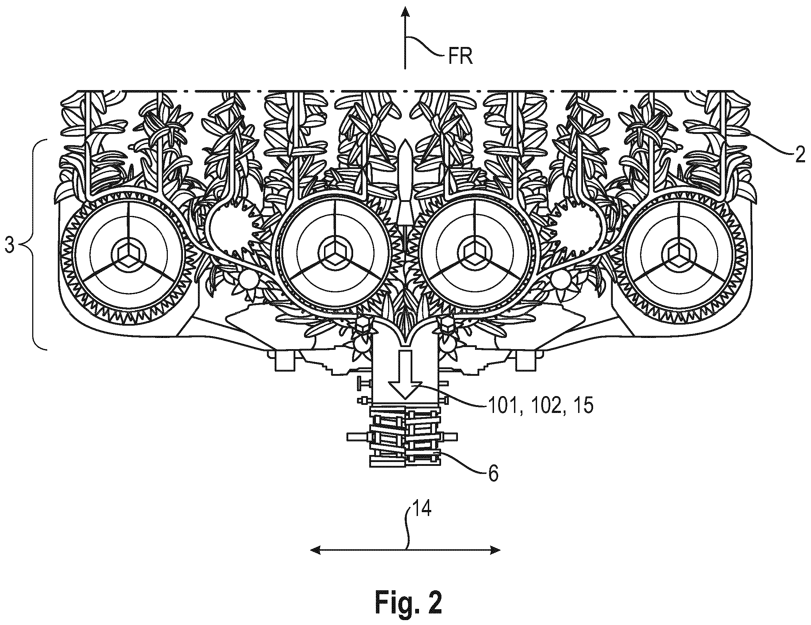

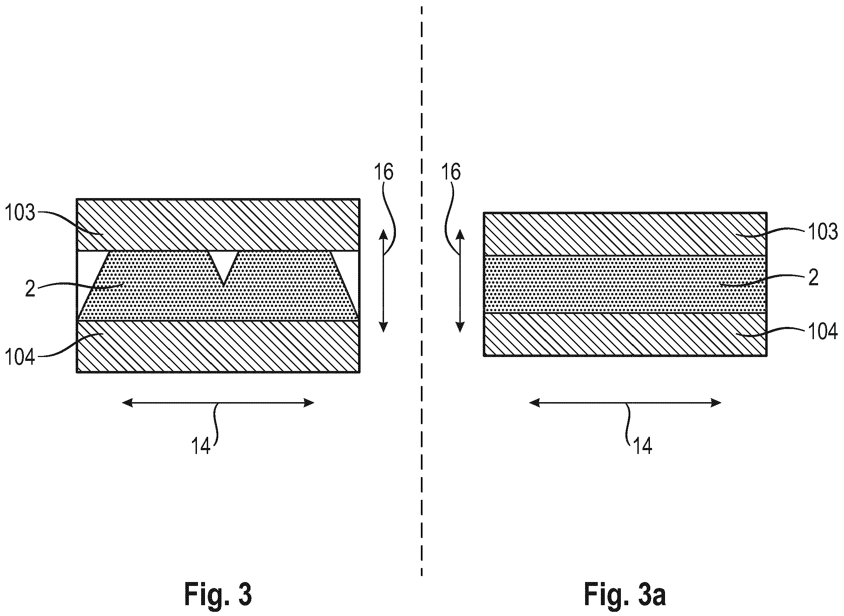

Eine Draufsicht auf einen Zweistrangeinzug mit einem Vorsatzgerät 3 ist beispielsweise in der Fig. 2 dargestellt. Typischerweise werden im selbstfahrenden Feldhäcksler 1 mehrere Gutstränge, insbesondere zwei Gutstränge, aus einem Vorsatzgerät 3 in den Erntegutbearbeitungskanal 4 gefördert. Diese Gutstränge bilden im selbstfahrenden Feldhäcksler 4 den Erntegutstrom 102 aus, der häufig keine gleichmäßige und/oder keine rechteckförmige Querschnittsverteilung aufweist. Eine solche nicht gleichmäßige und/oder nicht rechteckförmige Querschnittsverteilung des Erntegutes ist beispielhaft in der Fig. 3 dargestellt.

In der Fig. 3 sind beispielhaft die beiden Einzugstrommeln 103 und 104 dargestellt, die bezüglich einer Höhenrichtung 16, die quer zur Strömungsrichtung 15 des Ernteguts 2 und quer zur Querrichtung 14 ausgerichtet ist, voneinander beabstandet angeordnet sind. Die Querrichtung 14 kann parallel, insbesondere stets parallel, zur Häckseltrommel-Drehachse der Häckseltrommel 6 und/oder parallel, insbesondere stets parallel, zur Nachbeschleunigungstrommel-Drehachse der Nachbeschleunigungstrommel 7 ausgerichtet sein. Die Strömungsrichtung 15 kann parallel zu einer Tangente der Förderrichtung 101 und/oder parallel zu einer Tangente des Erntegutstromes 102 ausgerichtet sein. Die Häckseltrommel-Drehachse der Häckseltrommel 6 und/oder die Nachbeschleunigungstrommel-Drehachse der Nachbeschleunigungstrommel 7 kann quer zur Fahrrichtung F ausgerichtet sein.

Wie aus der Fig. 3 hervorgeht, entsteht bei zwei Gutsträngen oft ein Erntegutstrom mit einer M-förmigen Querschnittsverteilung. Eine solche ungleichmäßige Querschnittsverteilung des Erntegutstroms führt zu einer schlechteren Häckselqualität, die zu einer schlechteren Schnittqualität mit Überlängen des Erntegutes führen kann. Ferner führt eine nicht gleichmäßige und/oder nicht rechteckförmige Querschnittsverteilung des Erntegutstroms zu einem ungleichmäßigen Verschleiß der Bauteile des Feldhäckslers. Der ungleichmäßige Verschleiß der Bauteile, wie beispielsweise von Messern, Crackwalzen, usw., führt zu unnötig verkürzten Standzeiten der Bauteile.

Die Fig. 3a bis 8 beziehen sich auf den erfindungsgemäße Feldhäcksler 1, in denen die Unterschiede zum Stand der Technik gemäß der Fig. 1 bis 3 dargestellt sind.

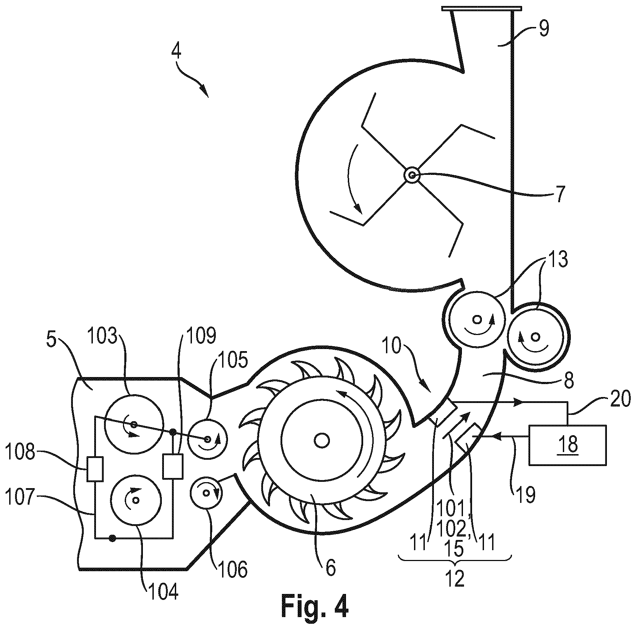

Die Fig. 4 zeigt einen erfindungsgemäße Erntegutbearbeitungskanal 4, der eine Messvorrichtung 10 zur Erfassung förderspezifischer Parameter und/oder gutspezifischer Parameter aufweist. Die Messvorrichtung 10 weist mehrere voneinander beabstandete Elektroden 11 auf, die im Zwischenkanal 8 des Erntegutbearbeitungskanals 4 angeordnet sind und mehrere Kondensatoren 12 ausbilden. Durch Messungen der elektrischen Kapazitäten der mehreren Kondensatoren 12 sind die förderspezifischen Parameter und/oder gutspezifischen Parameter ermittelbar.

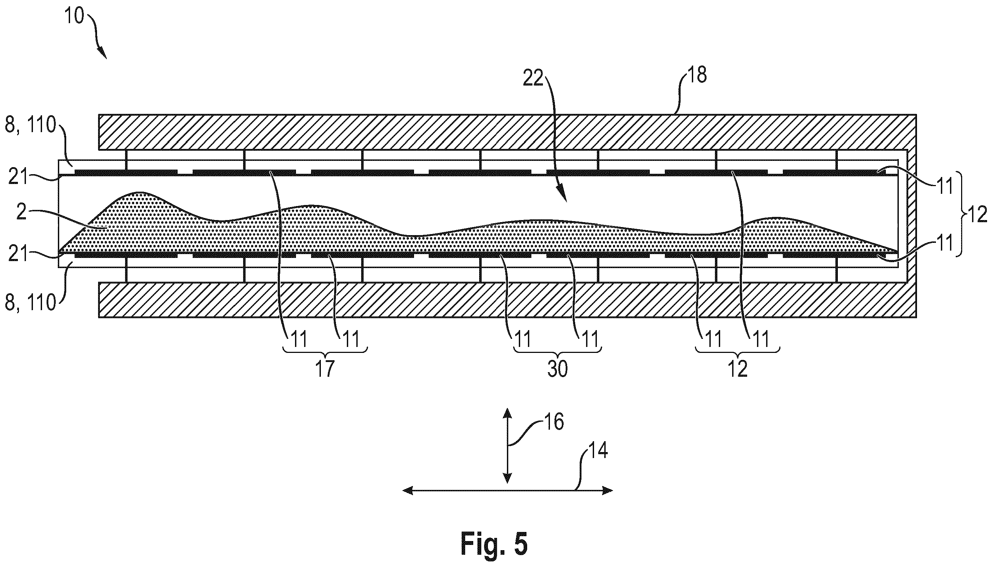

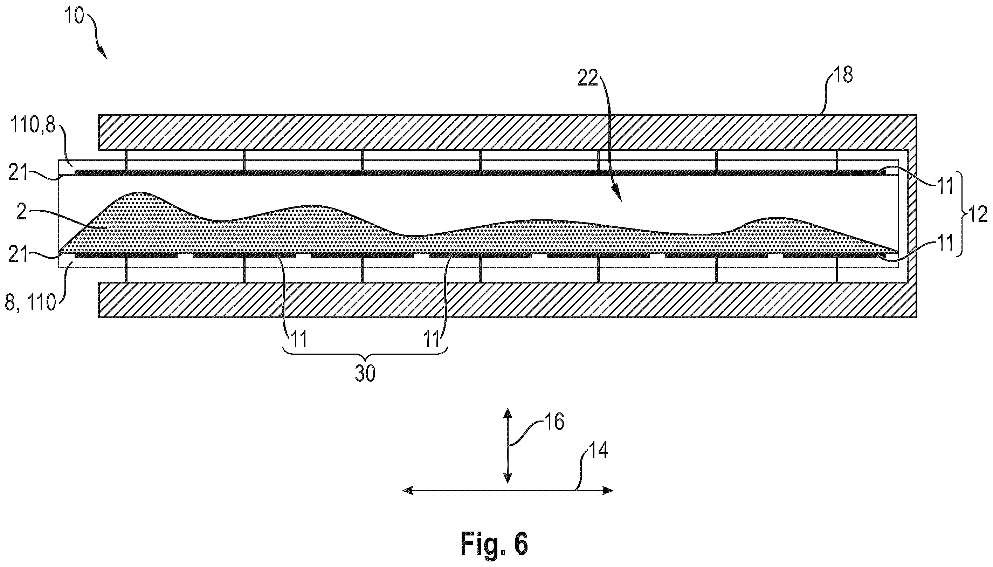

Im Gegensatz zur vereinfachten Darstellung in der Fig. 4, sind die Elektroden 11 innerhalb wenigstens einer Wandung 110 oder mehreren Wandungen 110 des Zwischenkanals 8 angeordnet, sodass die Elektroden 11 keinen Strömungswiderstand für das Erntegut 2 ausbildet. Dies ist beispielhaft in den Fig. 5 und Fig. 6 angedeutet.

Wie aus der Fig. 4 hervorgeht, kann der Erntegutbearbeitungskanal 4 eine Konditioniereinrichtung 13 zur Konditionierung des Ernteguts 2 aufweisen. Die Konditioniereinrichtung 13 ist bezüglich der Förderrichtung 101 zwischen der Häckseltrommel 6 und der Nachbeschleunigungstrommel 7 angeordnet. In einem solchen Aufbau sind die Elektroden 11 im Zwischenkanal 8 zwischen der Häckseltrommel 6 und der Konditioniereinrichtung 13 angeordnet.

Wie in der Fig. 5 dargestellt, sind die Kondensatoren 12 im Zwischenkanal 8 entlang einer Querrichtung 14 quer zur Strömungsrichtung 15 des Ernteguts 2 angeordnet. Hierbei sind können die Kondensatoren 12 bezüglich der Querrichtung 14 voneinander beabstandet angeordnet sein. Hierbei sind die Elektroden 11 der Kondensatoren 12 bezüglich einer Höhenrichtung 16, die quer zur Strömungsrichtung 15 des Ernteguts 2 und quer zur Querrichtung 14 ausgerichtet ist, voneinander beabstandet angeordnet, sodass das Erntegut 2 durch die Kondensatoren 12 durchströmen kann.

Die Fig. 5 deutet an, dass eine Elektrode 11 eines Kondensators 12 mit einer Elektrode 11 wenigstens eines weiteren Kondensators 12 einen Zwischenkodensator 17 ausbilden kann. Hierbei ist der Abstand zwischen den Elektroden 11 des Zwischenkodensators 17 größer als der Abstand der Elektroden 11 der Kondensatoren 12. Die Fig. 5 deutet an, dass wenigstens zwei bezüglich der Querrichtung 14 zueinander beabstandete Elektroden 11, deren Position bezüglich der Höhenrichtung 16 übereinstimmend ist, einen Querkondensator 30 ausbilden können.

Die Fig. 6 zeigt beispielhaft, dass eine einzige Elektrode 11 bezüglich der Höhenrichtung 16 von einer Vielzahl von Elektroden 11 beabstandet angeordnet sein kann, wobei diese einzige Elektrode 11 mit allen bezüglich der Höhenrichtung 16 beabstandeten Elektroden 11 mehrere Kondensatoren 12 ausbildet. Die einzige Elektrode 11 weist eine größere Ausdehnung bezüglich der Querrichtung 14 auf als die bezüglich der Höhenrichtung 16 voneinander beabstandeten Elektroden 11. Außerdem weist die einzige Elektrode 11 eine größere Ausdehnung entlang der Querrichtung 14 auf als die Summe der Querrichtungs-Ausdehnungen aller bezüglich der Höhenrichtung 16 von der einzigen bzw. längeren Elektrode 11 beabstandeten Elektroden 11. Auch in der Fig. 6 können wenigstens zwei bezüglich der Querrichtung 14 zueinander beabstandete Elektroden 11, deren Position bezüglich der Höhenrichtung 16 übereinstimmend ist, einen Querkondensator 30 ausbilden.

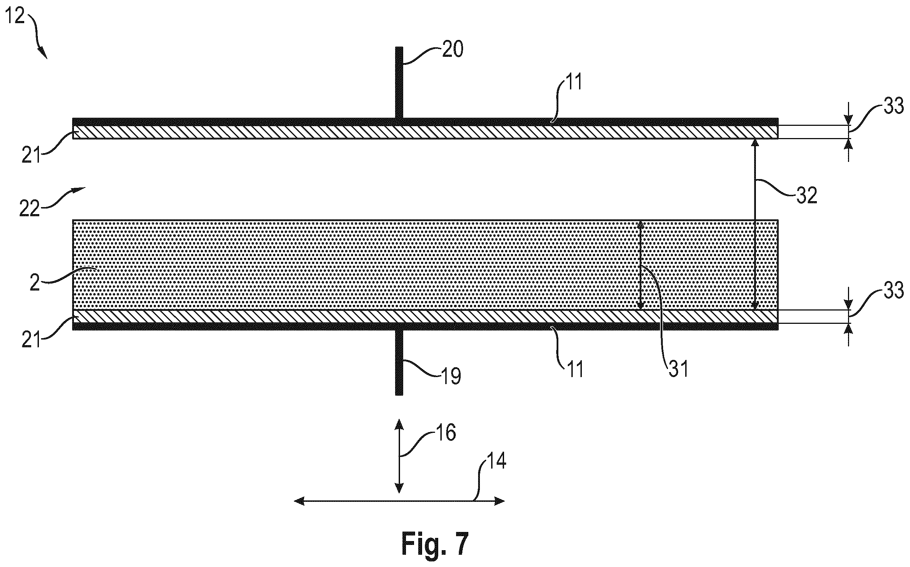

Die Fig. 7 zeigt beispielhaft den Aufbau eines Kondensators 12 der Fig. 5, der vom einem Erntegut 2 durchströmt wird. Der Kondensators 12 umfasst zwei Elektroden 11, die bezüglich der Höhenrichtung 16 derart voneinander beabstandet angeordnet sind, dass ein Erntegut 2 zwischen diesen beiden Elektroden 11 durchströmen kann. Die Elektroden 11 weisen jeweils eine Schutzeinrichtung 21, insbesondere eine elektrisch schwachleitende Schicht und/oder eine nichtleitende Schicht, auf. Diese Schutzeinrichtungen 21 können aus einem nicht-metallischen Material ausgebildet sein. Die Schutzeinrichtung 21 überdecken die Elektroden 11 derart, dass eine elektrische Stromleitung zwischen der ersten Elektrode 11 und der zweiten Elektrode 11 unterdrückt wird bzw. sich nicht ausbildet. Daher ist stets das Vorhandensein ein Kondensators 12 mit einer Kapazität gewährleistet. Es bildet sich jedoch ein elektrisches Feld zwischen der zwei Elektroden 11 des Kondensators 12 aus.

Das Erntegut 2 weist in diesem dargestellten Beispiel der Fig. 7 eine Höhendicke 31 auf, die beispielsweise kleiner als der Abstand der Schutzeinrichtungen 21 bezüglich der Höhenrichtung 16. Zwischen dem Erntegut 2 und der in Fig. 7 oberen Schutzeinrichtung 21 ist Luft 22 vorhanden und durch den weißen Bereich symbolisiert. Die Luft 22 weist im Vergleich zum Erntegut 2 eine andere Permittivität auf, sodass die Kapazität des Kondensator 12 von der Menge des durchströmenden Erntegutes 2 abhängt.

Das Erntegut 2 ändert die Permittivität des Raumes zwischen den Schutzeinrichtungen 21, welches das elektrische Feld durchsetzt. Die Änderung der Kapazität des Kondensators hängt von der Permittivität ab. Die Änderung ist sowohl vom Material des Ernteguts 2 als auch von dem Material-/Luftverhältnis abhängig. Da das Erntegut 2 als über die Breite konstant angenommen werden kann, ist das Kapazitätssignal des Kondensators 12 abhängig von der Menge an Erntegut 2 im Kondensator 12. Bei der Berechnung der Kapazität des Kondensators ist auch die Permittivität der Schutzeinrichtungen 21 zur Berechnung des Kapazitätssignals des Kondensators 12 miteinzubeziehen. Bei der Berechnung des Kapazitätssignals des Kondensators 12 ist eine Höhendicke 31 des Erntegutes 2 bezüglich der Höhenrichtung 16 miteinzubeziehen. Bei der Berechnung des Kapazitätssignals des Kondensators 12 ist ein Höhenabstand 32 der Schutzeinrichtungen 21 bezüglich der Höhenrichtung 16 miteinzubeziehen. Bei der Berechnung des Kapazitätssignals des Kondensators 12 sind die Höhendicke 36 der der Schutzeinrichtungen 21 bezüglich der Höhenrichtung 16 miteinzubeziehen.

Gemäß der Fig. 4 weist die Messvorrichtung 10 eine Steuerungs- und Regelungseinrichtung 18 auf, die dazu ausgebildet ist, die Kapazität der Kondensatoren 12 und/oder die Kapazität wenigstens eines Zwischenkodensators 17 und/oder die Kapazität wenigstens eines Querkondensators 30 zu erfassen. Ferner ist die Steuerungs- und Regelungseinrichtung 18 dazu ausgebildet, mittels der erfassten Kapazitäten die Querverteilung des Ernteguts 2 zu ermitteln und Aktoren des Vorsatzgerätes 3 und/oder Aktoren des Einzugskanals 5 anhand der ermittelten Querverteilung des Ernteguts 2 zu steuern. Das Vorsatzgerät 3 kann hierfür derart ausgebildet sein, dass die Position und/oder der Abstand und/oder die Drehzahl eines oder mehrerer nicht dargestellter Aktoren des Vorsatzgerätes 3 erfolgen kann. Der Erntegutbearbeitungskanal 4, insbesondere der Einzugskanal 5, kann derart ausgebildet sein, dass die Position und/oder der Abstand und/oder die Drehzahl eines oder mehrerer Aktoren 103, 104, 105 und/oder 106 des Einzugskanals erfolgen kann. Beispielsweise kann eine Vorpresseinrichtung 107 mit mehreren Hydraulikzylinder 108 und/oder elektrischen Zylinder 108 vorgesehen sein, die die Beabstandung zwischen den Einzugstrommeln 103, 104 und/oder die Beabstandung zwischen den Vorpresstrommeln 105, 106 anpasst. Beispielsweise kann die Steuerungs- und Regelungseinrichtung 18 diese Beabstandungen derart anpassen, dass beispielsweise eine optimale Querverteilung des Erntegut 2 erzielt wird. Eine solche optimale Querverteilung des Erntegut 2 ist beispielsweise in der Fig. 3a gezeigt, wobei die Beabstandung zwischen den Einzugstrommeln 103, 104 im Vergleich zur Fig. 3 zur Optimierung reduziert wurde.

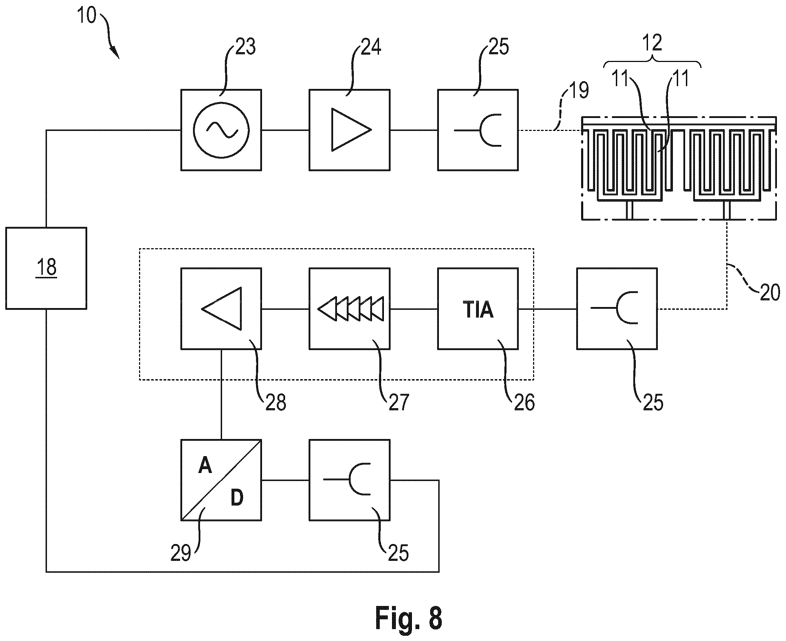

Gemäß der Fig. 8 weist die Messvorrichtung 10 wenigstens einen Wechselspannungserzeuger 23 zum Erzeugen einer Wechselspannung, eine Verstärkereinheit 24 zum Verstärken eines Signals, einen elektrischen Verstärker 26 zur Umwandlung eines Eingangsstroms in eine proportionale Ausgangsspannung, einen Detektor 27, insbesondere wenigstens einen logarithmischen Detektor, zur Umwandlung eines einer Wechselspannung in ein Leitungssignal, eine weitere Verstärkereinheit 28 zum Verstärken eines Signals, und wenigstens einen Analog-Digital-Wandler 29 zur Umwandlung eines analogen Signals in ein digitales, insbesondere digital interpretierbares, Signal auf.

Der Wechselspannungserzeuger 23 ist elektrisch leitend mit der Verstärkereinheit 24 verbunden, wobei die Verstärkereinheit 24 über ein Anschlussbauteil 25, welches ein Ausgangsbauteil ausbildet, mit einer ersten Elektrode 11 eines Kondensators 12 elektrisch leitend verbunden ist. Hierbei wird ein Eingangssignal 19 für den Kondensator 12 in Form von Wechselspannung an die erste Elektrode 11 eines Kondensators 12 übertragen. Eine zweite Elektrode 11 des Kondensators 4 ist beabstandet zur ersten Elektrode 11 angeordnet. Eine elektrische Stromleitung zwischen der ersten Elektrode 11 und der zweiten Elektrode 11 ist unterdrückt bzw. bildet sich nicht aus. Die zweite Elektrode 11 des Kondensators 12 kann mit einem weiteren Anschlussbauteil 25, welches ein Eingangsbauteil ausbildet, elektrisch leitend verbunden sein kann. Hierbei wird ein Ausgangssignal 20 des Kondensators 12 an das Anschlussbauteil 25 übertragen. Das weitere Anschlussbauteil 25 kann mit dem Transimpedanzverstärker 26 elektrisch leitend verbunden sein. Der Transimpedanzverstärker 26 kann elektrisch leitend mit dem Detektor 27, insbesondere dem logarithmischen Detektor, verbunden sein. Der Detektor 27, insbesondere der logarithmische Detektor, kann elektrisch leitend mit der Verstärkereinheit 28 verbunden sein. Die Verstärkereinheit 28 kann elektrisch leitend mit dem Analog-Digital-Wandler 29 verbunden sein. Der Analog-Digital-Wandler 29 kann mit einem weiteren Anschlussbauteil 25, welches ein Ausgangsbauteil ausbildet, verbunden sein. Die Steuerungs- und Regelungseinrichtung 18 kann zur Steuerung des Wechselspannungserzeuger 23 sowie zum Auslesen bzw. erfassen der Kapazitäten der Kondensatoren 12 ausgebildet sein.

### Bezugszeichenliste

- 1: Feldhäcksler
- 2: Erntegut, Erntegutbestand
- 3: Vorsatzgerät
- 4: Erntegutbearbeitungskanal
- 5: Einzugskanal
- 6: Häckseltrommel
- 7: Nachbeschleunigungstrommel
- 8: Zwischenkanal
- 9: Auswurfschacht
- 10: Messvorrichtung
- 11: Elektrode
- 12: Kondensator
- 13: Konditioniereinrichtung
- 14: Querrichtung
- 15: Strömungsrichtung
- 16: Höhenrichtung
- 17: Zwischenkodensator
- 18: Steuerungs- und Regelungseinrichtung
- 19: Eingangssignal
- 20: Ausgangsignal
- 21: Schutzeinrichtung
- 22: Luft
- 23: Wechselspannungserzeuger
- 24: Verstärkereinheit
- 25: Anschlussbauteil
- 26: elektrischer Verstärker
- 27: Detektor, insbesondere logarithmischer Detektor
- 28: Verstärkereinheit
- 29: Analog-Digital-Wandler
- 30: Querkondensator
- 31: Höhendicke des Erntegutes
- 32: Höhenabstand der Schutzeinrichtungen
- 33: Höhendicke der Schutzeinrichtungen
- 100: Auswurfkrümmer
- 101: Förderrichtung
- 102: Erntegutstrom
- 103,104: Einzugstrommeln
- 105, 106: Vorpresstrommeln
- 107: Vorpresseinrichtung
- 108, 109: Hydraulikzylinder und/oder Elektrozylinder
- 110: Wandung
- FR: Fahrtrichtung

## Patentansprüche

1. Selbstfahrender Feldhäcksler (1) zur Aufnahme und Behandlung von Erntegut (2),
- mit einem Vorsatzgerät (3) zur Aufnahme von Erntegut (2), und
- mit einem Erntegutbearbeitungskanal (4), der dem Vorsatzgerät (3) nachgeordnet ist,
- wobei der Erntegutbearbeitungskanal (4) einen Einzugskanal (5) zum Zuführen des Ernteguts (2) in den Feldhäcksler (1) aufweist,
- wobei der Erntegutbearbeitungskanal (4) eine Häckseltrommel (6) zum Verarbeiten des Ernteguts (2) aufweist,
- wobei der Erntegutbearbeitungskanal (4) eine Nachbeschleunigungstrommel (7) zum Nachbeschleunigen des Ernteguts (2) aufweist,
- wobei der Erntegutbearbeitungskanal (4) einen Zwischenkanal (8) zum Weiterführen des Ernteguts (2) von der Häckseltrommel (6) zur Nachbeschleunigungstrommel (7) aufweist,
- wobei der Erntegutbearbeitungskanal (4) einen Auswurfschacht (9) zum Auswerfen des Ernteguts (2) aufweist,
- wobei der Feldhäcksler (1) eine Messvorrichtung (10) zur Erfassung förderspezifischer Parameter und/oder gutspezifischer Parameter aufweist,
- dass die Messvorrichtung (10) mehrere voneinander beabstandete Elektroden (11) aufweist,
**dadurch gekennzeichnet,**
- die Elektroden (11) im Zwischenkanal (8) des Erntegutbearbeitungskanals (4) angeordnet sind und mehrere Kondensatoren (12) ausbilden,
- wobei durch Messungen der elektrischen Kapazitäten der mehreren Kondensatoren (12) die förderspezifischen Parameter und/oder gutspezifischen Parameter ermittelbar sind.

2. Selbstfahrender Feldhäcksler (1) nach Anspruch 1,
**dadurch gekennzeichnet,**
**dass** die Messvorrichtung (10) dazu ausgebildet ist, mittels der gemessenen Kapazitäten aller Kondensatoren (12) eine Querverteilung des Ernteguts (2) zu ermitteln und eine Optimierung der Querverteilung des Ernteguts (2) im Falle einer nicht gleichmäßigen Querverteilung des Ernteguts (2) zu initiieren.

3. Selbstfahrender Feldhäcksler (1) nach Anspruch 1 oder 2,
**dadurch gekennzeichnet,**
**dass** die Elektroden (11) innerhalb wenigstens einer Wandung (110) des Zwischenkanals (8) angeordnet sind.

4. Selbstfahrender Feldhäcksler (1) nach einem der vorangehenden Ansprüche,
**dadurch gekennzeichnet,**
- **dass** der Erntegutbearbeitungskanal (4) eine Konditioniereinrichtung (13) zur Konditionierung des Ernteguts (2) aufweist,
- wobei die Konditioniereinrichtung (13) zwischen der Häckseltrommel (6) und der Nachbeschleunigungstrommel (7) angeordnet ist,
- wobei die Elektroden (11) im Zwischenkanal (8) zwischen der Häckseltrommel (6) und der Konditioniereinrichtung (13) angeordnet sind.

5. Selbstfahrender Feldhäcksler (1) nach einem der vorangehenden Ansprüche,
**dadurch gekennzeichnet,**
- **dass** die Kondensatoren (12) im Zwischenkanal (8) entlang einer Querrichtung (14) quer zur Strömungsrichtung (15) des Ernteguts (2) angeordnet sind, und/oder
- **dass** die Elektroden (11) der Kondensatoren (12) bezüglich einer Höhenrichtung (16), die quer zur Strömungsrichtung (15) des Ernteguts (2) und quer zur Querrichtung (14) ausgerichtet ist, voneinander beabstandet angeordnet sind, sodass das Erntegut (2) durch die Kondensatoren (12) durchströmen kann.

6. Selbstfahrender Feldhäcksler (1) nach einem der vorangehenden Ansprüche,
**dadurch gekennzeichnet,**
- **dass** eine Elektrode (11) eines Kondensators (12) mit einer Elektrode (11) wenigstens eines weiteren Kondensators (12) einen Zwischenkodensator (17) ausbildet,
- wobei der Abstand zwischen diesen Elektroden (11) des Zwischenkodensators (17) größer ist als der Abstand der Elektroden (11) der Kondensatoren (12).

7. Selbstfahrender Feldhäcksler (1) nach einem der vorangehenden Ansprüche,
**dadurch gekennzeichnet,**
- **dass** eine einzige Elektrode (11) bezüglich der Höhenrichtung (16) von einer Vielzahl von Elektroden (11) beabstandet angeordnet ist,
- wobei diese einzige Elektrode (11) mit allen bezüglich der Höhenrichtung (16) beabstandeten Elektroden (11) mehrere Kondensatoren (12) ausbildet.

8. Selbstfahrender Feldhäcksler (1) nach Anspruch 7,
**dadurch gekennzeichnet,**
- **dass** die einzige Elektrode (11) eine größere Ausdehnung bezüglich der Querrichtung (14) aufweist als die bezüglich der Höhenrichtung (16) beabstandeten Elektroden (11), und/oder
- **dass** die einzige Elektrode (11) eine größere Ausdehnung entlang der Querrichtung (14) aufweist als die Summe der Querrichtungs-Ausdehnungen aller bezüglich der Höhenrichtung beabstandeten Elektroden (11).

9. Selbstfahrender Feldhäcksler (1) nach einem der vorangehenden Ansprüche,
**dadurch gekennzeichnet,**
**dass** wenigstens zwei bezüglich der Querrichtung (14) zueinander beabstandete Elektroden (11), deren Position bezüglich der Höhenrichtung (16) übereinstimmend ist, einen Querkondensator (30) ausbilden.

10. Selbstfahrender Feldhäcksler (1) nach einem der vorangehenden Ansprüche,
**dadurch gekennzeichnet,**
- **dass** die Messvorrichtung (10) eine Steuerungs- und Regelungseinrichtung (18) aufweist, die dazu ausgebildet ist, die Kapazität der Kondensatoren (12) und/oder die Kapazität wenigstens eines Zwischenkodensators (17) und/oder die Kapazität wenigstens eines Querkondensators (30) zu erfassen,
- wobei die Steuerungs- und Regelungseinrichtung (18) dazu ausgebildet ist, mittels der erfassten Kapazitäten die Querverteilung des Ernteguts (2) zu ermitteln,
- wobei die Steuerungs- und Regelungseinrichtung (18) dazu ausgebildet ist, Aktoren des Vorsatzgerätes (3) und/oder Aktoren des Einzugskanals (5) anhand der ermittelten Querverteilung des Ernteguts (2) zu steuern.

11. Selbstfahrender Feldhäcksler (1) nach einem der vorangehenden Ansprüche,
**dadurch gekennzeichnet,**
- **dass** die Messvorrichtung (10) wenigstens einen Wechselspannungserzeuger (23) zum Erzeugen einer Wechselspannung aufweist, und/oder
- **dass** die Messvorrichtung (10) wenigstens eine Verstärkereinheit (24, 28) zum Verstärken eines Signals aufweist, und/oder
- **dass** die Messvorrichtung (10) wenigstens einen elektrischen Verstärker (26) zur Umwandlung eines Eingangsstroms in eine proportionale Ausgangsspannung aufweist, und/oder
- **dass** die Messvorrichtung (10) wenigstens einen Detektor (27), insbesondere wenigstens einen logarithmischen Detektor, zur Umwandlung eines einer Wechselspannung in ein Leitungssignal aufweist, und/oder
- **dass** die Messvorrichtung (10) wenigstens einen Analog-Digital-Wandler (29) zur Umwandlung eines analogen Signals in ein digitales Signal aufweist.

12. Selbstfahrender Feldhäcksler (1) nach einem der vorangehenden Ansprüche,
**dadurch gekennzeichnet,**
- **dass** wenigstens ein Kondensator (12) zwei Elektroden (11) aufweist, wobei diese Elektroden (11) bezüglich der Höhenrichtung (16) einen Abstand von 130 mm bis 180 mm, insbesondere 150 mm, aufweisen, und/oder
- **dass** wenigstens ein Kondensator (12) wenigstens eine Elektrode (11) aufweist, die bezüglich der Querrichtung (14) und bezüglich der Strömungsrichtung (15) unterschiedliche Längen aufweist.

13. Verfahren zum Steuern eines selbstfahrenden Feldhäckslers (1) nach einem der vorangehenden Ansprüche, mit den Schritten:
- Erfassen der Kapazität der Kondensatoren (12) und/oder der Kapazität wenigstens eines Zwischenkodensators (17) und/oder der Kapazität wenigstens eines Querkondensators (30),
- Ermitteln der Querverteilung des Ernteguts (2) basierend auf den erfassten Kapazitäten,
- Ansteuern der Aktoren des Vorsatzgerätes (3) und/oder der Aktoren des Einzugskanals (5) in Abhängigkeit von der ermittelten Querverteilung des Ernteguts (2).

14. Verfahren nach Anspruch 13,
**dadurch gekennzeichnet,**
- **dass** das Erfassen der Kapazität der Kondensatoren (12) und/oder der Kapazität wenigstens eines Zwischenkodensators (17) und/oder der Kapazität wenigstens eines Querkondensators (30) zeitlich nacheinander erfolgt, und/oder
- **dass** das Erfassen der Kapazität der Kondensatoren (12) und/oder der Kapazität wenigstens eines Zwischenkodensators (17) und/oder der Kapazität wenigstens eines Querkondensators (30) zeitgleich erfolgt.

15. Verfahren nach Anspruch 13 oder 14,
**dadurch gekennzeichnet,**
**dass** eine Optimierung der Querverteilung des Ernteguts (2) im Falle einer nicht gleichmäßigen Querverteilung des Ernteguts (2) initiiert wird, wobei hierfür das Ansteuern der Aktoren des Vorsatzgerätes (3) und/oder der Aktoren des Einzugskanals (5) in Abhängigkeit von der ermittelten Querverteilung des Ernteguts (2) erfolgt.

## Claims

1. A self-propelled forage harvester (1) for picking up and treating harvested material (2),
- with a front attachment (3) for picking up harvested material (2), and
- with a harvested material processing channel (4), which is downstream of the front attachment (3),
- wherein the harvested material processing channel (4) has an intake channel (5) for feeding the harvested material (2) into the forage harvester (1),
- wherein the harvested material processing channel (4) has a chopping drum (6) for processing the harvested material (2),
- wherein the harvested material processing channel (4) has a post-acceleration drum (7) for post-acceleration of the harvested material (2),
- wherein the harvested material processing channel (4) has an intermediate channel (8) for the further transport of the harvested material (2) from the chopping drum (6) to the post-acceleration drum (7),
- wherein the harvested material processing channel (4) has a discharge chute (9) for discharging the harvested material (2),
- wherein the forage harvester (1) has a measuring device (10) for detecting conveying-specific parameters and/or material-specific parameters,
- in that the measuring device (10) has a plurality of electrodes (11) which are spaced apart from each other,
**characterized in that**
- the electrodes (11) are disposed in the intermediate channel (8) of the harvested material processing channel (4) and form a plurality of capacitors (12),
- wherein the conveying-specific parameters and/or material-specific parameters can be determined by measurements of the electrical capacitances of the plurality of capacitors (12).

2. The self-propelled forage harvester (1) according to claim 1,
**characterized in that**
the measuring device (10) is configured to determine a transverse distribution of the harvested material (2) by means of the measured capacitances of all of the capacitors (12) and to initiate an optimization of the transverse distribution of the harvested material (2) in the case of a non-uniform transverse distribution of the harvested material (2).

3. The self-propelled forage harvester (1) according to claim 1 or claim 2,
**characterized in that**
the electrodes (11) are disposed within at least one wall (110) of the intermediate channel (8).

4. The self-propelled forage harvester (1) according to one of the preceding claims,
**characterized in that**
- the harvested material processing channel (4) has a conditioning device (13) for conditioning the harvested material (2),
- wherein the conditioning device (13) is disposed between the chopping drum (6) and the post-acceleration drum (7),
- wherein the electrodes (11) are disposed in the intermediate channel (8) between the chopping drum (6) and the conditioning device (13).

5. The self-propelled forage harvester (1) according to one of the preceding claims,
**characterized in that**
- the capacitors (12) in the intermediate channel (8) are disposed along a transverse direction (14) transversely to the direction of flow (15) of the harvested material (2), and/or
- the electrodes (11) of the capacitors (12) are spaced apart from each other with respect to a height direction (16) which is orientated transversely to the direction of flow (15) of the harvested material (2) and transversely to the transverse direction (14), so that the harvested material (2) can flow through the capacitors (12).

6. The self-propelled forage harvester (1) according to one of the preceding claims,
**characterized in that**
- an electrode (11) of a capacitor (12) forms an intermediate capacitor (17) with an electrode (11) of at least one further capacitor (12),
- wherein the distance between these electrodes (11) of the intermediate capacitor (17) is greater than the separation of the electrodes (11) of the capacitors (12).

7. The self-propelled forage harvester (1) according to one of the preceding claims,
**characterized in that**
- a single electrode (11) is disposed spaced apart from a plurality of electrodes (11) with respect to the height direction (16),
- wherein this single electrode (11) forms a plurality of capacitors (12) with all of the electrodes (11) being spaced apart with respect to the height direction (16).

8. The self-propelled forage harvester (1) according to claim 7, **characterized in that**
- the single electrode (11) has a larger extent with respect to the transverse direction (14) than the electrodes (11) which are spaced apart with respect to the height direction (16), and/or
- the single electrode (11) has a larger extent along the transverse direction (14) than the sum of the transverse extents of all of the electrodes (11) which are spaced apart with respect to the height direction.

9. The self-propelled forage harvester (1) according to one of the preceding claims,
**characterized in that**
at least two electrodes (11) which are spaced apart from each other with respect to the transverse direction (14) and which are at positions which coincide with respect to the height direction (16) form a transverse capacitor (30).

10. The self-propelled forage harvester (1) according to one of the preceding claims,
**characterized in that**
- the measuring device (10) has a controlling and regulating device (18) which is configured to detect the capacitance of the capacitors (12) and/or the capacitance of at least one intermediate capacitor (17) and/or the capacitance of at least one transverse capacitor (30),
- wherein the controlling and regulating device (18) is configured to determine the transverse distribution of the harvested material (2) by means of the detected capacitances,
- wherein the controlling and regulating device (18) is configured to control actuators of the front attachment (3) and/or actuators of the intake channel (5) with the aid of the determined transverse distribution of the harvested material (2).

11. The self-propelled forage harvester (1) according to one of the preceding claims,
**characterized in that**
- the measuring device (10) has at least one alternating voltage generator (23) for generating an alternating voltage, and/or
- the measuring device (10) has at least one amplifier unit (24, 28) for amplifying a signal, and/or
- the measuring device (10) has at least one electrical amplifier (26) for converting an input current into a proportional output voltage, and/or
- the measuring device (10) has at least one detector (27), in particular at least one logarithmic detector, for converting an alternating voltage into a line signal, and/or
- the measuring device (10) has at least one analogue-to-digital converter (29) for converting an analogue signal into a digital signal.

12. The self-propelled forage harvester (1) according to one of the preceding claims,
**characterized in that**
- at least one capacitor (12) has two electrodes (11), wherein these electrodes (11) have a separation of 130 mm to 180 mm, in particular 150 mm, with respect to the height direction (16), and/or
- at least one capacitor (12) has at least one electrode (11) which has different lengths with respect to the transverse direction (14) and with respect to the direction of flow (15).

13. A method for controlling a self-propelled forage harvester (1) according to one of the preceding claims, with the steps of:
- detecting the capacitance of the capacitors (12) and/or the capacitance of at least one intermediate capacitor (17) and/or the capacitance of at least one transverse capacitor (30),
- determining the transverse distribution of the harvested material (2) on the basis of the detected capacities,
- controlling the actuators of the front attachment (3) and/or the actuators of the intake channel (5) as a function of the determined transverse distribution of the harvested material (2).

14. The method according to claim 13,
**characterized in that**
- the detection of the capacitance of the capacitors (12) and/or the capacitance of at least one intermediate capacitor (17) and/or the capacitance of at least one transverse capacitor (30) is carried out sequentially over time, and/or
- the detection of the capacitance of the capacitors (12) and/or the capacitance of at least one intermediate capacitor (17) and/or the capacitance of at least one transverse capacitor (30) is carried out simultaneously.

15. The method according to claim 13 or claim 14,
**characterized in that**
an optimization of the transverse distribution of the harvested material (2) is initiated in the case of a non-uniform transverse distribution of the harvested material (2), wherein to this end, the actuators of the front attachment (3) and/or the actuators of the intake channel (5) are controlled as a function of the determined transverse distribution of the harvested material (2).

## Revendications

1. Récolteuse-hacheuse-chargeuse (1) automotrice destinée à la collecte et au traitement de produits récoltés (2),
- comprenant une tête de récolte (3) destinée à la collecte de produits à récolter (2), et
- comprenant un canal de traitement de récolte (4) qui est disposé en aval de la tête de récolte (3),
- le canal de traitement de récolte (4) présentant un canal d'alimentation (5) destiné à amener la récolte (2) dans la récolteuse-hacheuse-chargeuse (1),
- le canal de traitement de récolte (4) présentant un tambour hacheur (6) destiné au traitement de la récolte (2),
- le canal de traitement de récolte (4) présentant un tambour distributeur-accélérateur (7) destiné à réaliser une post-accélération de la récolte (2),
- le canal de traitement de récolte (4) présentant un canal intermédiaire (8) destiné au guidage ultérieur de la récolte (2), depuis le tambour hacheur (6) vers le tambour distributeur-accélérateur (7),
- le canal de traitement de récolte (4) présentant un conduit d'éjection (9) destiné à éjecter la récolte (2),
- la récolteuse-hacheuse-chargeuse (1) présentant un dispositif de mesure (10) destiné à recueillir des paramètres spécifiques au transport et/ou des paramètres spécifiques aux produits,
- que le dispositif de mesure (10) présente plusieurs électrodes (11) espacées les unes des autres,
**caractérisée en ce que**
- les électrodes (11) sont disposées dans le canal intermédiaire (8) du canal de traitement de récolte (4) et forment plusieurs condensateurs (12),
- des mesures des capacités électriques de la pluralité de condensateurs (12) permettant de déterminer les paramètres spécifiques au transport et/ou les paramètres spécifiques aux produits.

2. Récolteuse-hacheuse-chargeuse (1) automotrice selon la revendication 1,
**caractérisée en ce que**
le dispositif de mesure (10) est conçu pour déterminer une répartition transversale de la récolte (2) à l'aide des capacités mesurées de tous les condensateurs (12), et pour déclencher une optimisation de la répartition transversale de la récolte (2) dans le cas d'une répartition transversale non régulière de la récolte (2).

3. Récolteuse-hacheuse-chargeuse (1) automotrice selon la revendication 1 ou 2,
**caractérisée en ce que**
les électrodes (11) sont disposées à l'intérieur d'au moins une paroi (110) du canal intermédiaire (8).

4. Récolteuse-hacheuse-chargeuse (1) automotrice selon une des revendications précédentes,
**caractérisée en ce que**
- le canal de traitement de récolte (4) présente un dispositif de conditionnement (13) pour le conditionnement de la récolte (2),
- le dispositif de conditionnement (13) étant placé entre le tambour hacheur (6) et le tambour distributeur-accélérateur (7),
- les électrodes (11) étant disposées dans le canal intermédiaire (8), entre le tambour hacheur (6) et le dispositif de conditionnement (13).

5. Récolteuse-hacheuse-chargeuse (1) automotrice selon une des revendications précédentes,
**caractérisée en ce que**
- les condensateurs (12) sont disposés dans le canal intermédiaire (8), le long d'une direction transversale (14) perpendiculaire au sens d'écoulement (15) de la récolte (2), et/ou
- **en ce que** les électrodes (11) des condensateurs (12) sont disposées à distance les unes des autres, par rapport à une direction de hauteur (16) qui est orientée perpendiculairement au sens d'écoulement (15) de la récolte (2) et perpendiculairement à la direction transversale (14), de sorte que la récolte (2) peut s'écouler à travers les condensateurs (12).

6. Récolteuse-hacheuse-chargeuse (1) automotrice selon une des revendications précédentes,
**caractérisée en ce que**
- une électrode (11) d'un condensateur (12) forme un condensateur intermédiaire (17) avec une électrode (11) au moins d'un autre condensateur (12),
- la distance entre ces électrodes (11) du condensateur intermédiaire (17) étant supérieure à la distance des électrodes (11) des condensateurs (12).

7. Récolteuse-hacheuse-chargeuse (1) automotrice selon une des revendications précédentes,
**caractérisée en ce que**
- une seule électrode (11) est disposée en étant espacée d'une pluralité d'électrodes (11), par rapport à la direction de hauteur (16),
- cette électrode (11) unique formant plusieurs condensateurs (12) avec toutes les électrodes (11) espacées par rapport à la direction de hauteur (16).

8. Récolteuse-hacheuse-chargeuse (1) automotrice selon la revendication 7,
**caractérisée en ce que**
- l'unique électrode (11) présente une dimension par rapport à la direction transversale (14) qui est plus grande que celle des électrodes (11) espacées par rapport à la direction de hauteur (16), et/ou
- **en ce que** l'unique électrode (11) présente une dimension le long de la direction transversale (14) qui est plus grande que la somme des dimensions de direction transversale de toutes les électrodes (11) espacées par rapport à la direction de hauteur.

9. Récolteuse-hacheuse-chargeuse (1) automotrice selon une des revendications précédentes,
**caractérisée en ce que**
au moins deux électrodes (11), qui sont espacées l'une par rapport à l'autre par rapport à la direction transversale (14) et dont la position est concordante par rapport à la direction de hauteur (16), forment un condensateur transversal (30).

10. Récolteuse-hacheuse-chargeuse (1) automotrice selon une des revendications précédentes,
**caractérisée en ce que**
- le dispositif de mesure (10) présente un dispositif de commande et de régulation (18) qui est conçu pour détecter la capacité des condensateurs (12) et/ou la capacité d'au moins un condensateur intermédiaire (17) et/ou la capacité d'au moins un condensateur transversal (30),
- le dispositif de commande et de régulation (18) étant réalisé pour déterminer la répartition transversale de la récolte (2), à l'aide des capacités détectées,
- le dispositif de commande et de régulation (18) étant conçu pour commander des actionneurs de la tête de récolte (3) et/ou des actionneurs du canal d'alimentation (5), à l'aide de la répartition transversale déterminée de la récolte (2).

11. Récolteuse-hacheuse-chargeuse (1) automotrice selon une des revendications précédentes,
**caractérisée en ce que**
- le dispositif de mesure (10) présente au moins un générateur de tension alternative (23) destiné à produire une tension alternative, et/ou
- **en ce que** le dispositif de mesure (10) présente au moins une unité d'amplificateur (24, 28) destinée à amplifier un signal, et/ou
- **en ce que** le dispositif de mesure (10) présente au moins un amplificateur électrique (26) destiné à transformer un courant d'entrée en une tension de sortie proportionnelle, et/ou
- **en ce que** le dispositif de mesure (10) présente au moins un détecteur (27), en particulier au moins un détecteur logarithmique, destiné à transformer une tension alternative en un signal de ligne, et/ou
- **en ce que** le dispositif de mesure (10) présente au moins un convertisseur analogique-numérique (29) destiné à convertir un signal analogique en un signal numérique.

12. Récolteuse-hacheuse-chargeuse (1) automotrice selon une des revendications précédentes,
**caractérisée en ce que**
- au moins un condensateur (12) comporte deux électrodes (11), lesdites électrodes (11) présentant, par rapport à la direction de hauteur (16), une distance allant de 130 mm à 180 mm, et étant en particulier de 150 mm, et/ou
- **en ce qu'**au moins un condensateur (12) comporte au moins une électrode (11) qui présente des longueurs différentes par rapport à la direction transversale (14) et par rapport au sens d'écoulement (15).

13. Procédé de commande d'une récolteuse-hacheuse-chargeuse (1) automotrice selon une des revendications précédentes, comprenant les étapes suivantes :
- détection de la capacité des condensateurs (12) et/ou de la capacité d'au moins un condensateur intermédiaire (17) et/ou de la capacité d'au moins un condensateur transversal (30),
- détermination de la répartition transversale de la récolte (2) sur la base des capacités détectées,
- activation des actionneurs de la tête de récolte (3) et/ou des actionneurs du canal d'alimentation (5), en fonction de la répartition transversale déterminée de la récolte (2).

14. Procédé selon la revendication 13,
**caractérisée en ce que**
- la détection de la capacité des condensateurs (12) et/ou de la capacité d'au moins un condensateur intermédiaire (17) et/ou de la capacité d'au moins un condensateur transversal (30) s'effectue successivement dans le temps, et/ou
- **en ce que** la détection de la capacité des condensateurs (12) et/ou de la capacité d'au moins un condensateur intermédiaire (17) et/ou de la capacité d'au moins un condensateur transversal (30) s'effectue en même temps.

15. Procédé selon la revendication 13 ou 14,
**caractérisée en ce que**
en cas de répartition transversale non régulière de la récolte (2), une optimisation de la répartition transversale de la récolte (2) est déclenchée, l'activation des actionneurs de la tête de récolte (3) et/ou des actionneurs du canal d'alimentation (5) s'effectuant à cet effet en fonction de la répartition transversale déterminée de la récolte (2).
